# EUROPEAN PATENT SPECIFICATION

(11) **EP 4 295 041 B1**
(45) Date of publication and mention of the grant of the patent: **03.07.2024**
(21) Application number: 22710622.6
(22) Date of filing: 09.03.2022
(51) Int. Cl.: F03D 80/00, F03D 17/00

(54) **OPERATING A WIND TURBINE IN A SEVERE WEATHER CONDITION**
BETRIEB EINER WINDTURBINE IN SCHWIERIGEN WITTERUNGSBEDINGUNGEN
EXPLOITATION D'UNE ÉOLIENNE DANS DES CONDITIONS MÉTÉOROLOGIQUES DIFFICILES

(30) Priority: 31.03.2021 EP 21166324
(43) Date of publication of application: 27.12.2023
(73) Proprietor: Siemens Gamesa Renewable Energy A/S, 7330 Brande (DK)
(72) Inventor: EGEDAL, Per, 7400 Herning (DK); ANDERSEN, Martin Folmer, 1799 Copenhagen (DK); HAGLER, Carla, 7100 Vejle (DK); RAMIREZ REQUESON, Oscar, 2665 Vallensbæk Strand (DK)
(74) Representative: SGRE-Association
(86) International application number: PCT/EP2022/056047
(87) International publication number: WO 2022/207262

(56) References cited:
- WO-A1-2013/083131
- WO-A1-2019/158171
- WO-A2-2010/083835
- CN-A- 109 488 529
- CN-A- 111 779 628
- US-A1- 2004 258 521
- US-A1- 2011 193 344

## Description

### Field of invention

The present invention relates to a method and to an arrangement of operating a wind turbine, in particular for protecting against a severe weather condition. Furthermore, the present invention relates to a wind park including the arrangement.

### Art Background

US 2020/0332766 A1 provides a control method for a wind turbine, including acquiring current working conditions of a power system, a yaw system and a communication system of the wind turbine when a typhoon warning signal is received; determining a target control strategy corresponding to the current working conditions according to a preset corresponding relationship between control strategies and working conditions of the power system, the yaw system and the communication system, wherein the control strategies may include an active windward strategy for controlling the yaw system to face typhoon wind direction, a controlled passive leeward strategy for controlling the yaw system to face opposite to the typhoon wind direction, and a passive leeward strategy for adjusting the yaw system to face opposite to the typhoon wind direction; and controlling the wind turbine by using the target control strategy.

In a severe weather condition, like a storm, a cyclone, a wind turbine or an entire wind turbine park may be at risk of being damaged. For example, an approaching storm and/or tropical cyclone may cause very high loads on wind turbines.

Turbines which are not designed for these load levels when idling upwind may protect themselves by yawing to a downwind position. However, since the yawing to downwind position may take some time depending on the yaw system, the wind turbine might not have enough time to protect itself by yawing the turbine, for example if the storm is too close to the park or is approaching with a too high speed.

Especially, when the wind turbine in general is not in an upwind yaw position, this may result in very high loads. The high loads may result in a heavy design of the wind turbine and the support structure. This adds significant cost on wind farms where there is a risk of cyclones or typhons.

Conventionally, a wind turbine may have been yawed to a downwind position based on individual measurements as for example wind speed, blade loads or other signals. Thereby, conventionally, the downwind position or in general a safe operational state may not be reached early enough before the storm approaches the wind turbine. In general, conventionally, safety systems may have been introduced which may react on abnormal situations and put the turbine into a safe state. Conventionally, the abnormal event or severe weather condition needs to be detected by each of the individual wind turbines and then the wind turbines may be put into a safe operational state. However, if the severe weather condition or in particular a storm is approaching very fast, the reactive behaviour of the safety systems may only provide a limited reduction of the loads. Other prior art solutions are described in documents CN111 779 628 A, WO2010/083835 A2, CN109 488 529 A, US2004/258521 A1, WO 2013/083131 A1 and US2011/193344 A1.

Thus, there may be a need for a method and a corresponding arrangement of operating a wind turbine, wherein security and safety of the wind turbine may be ensured also in case of potential damaging weather conditions, like a storm, a cyclone or a typhoon. In particular, there may be a need for such a method and a corresponding arrangement, wherein the wind turbines are enabled to earlier adopt a safe operational state when compared to systems of the prior art.

### Summary of the Invention

This need may be met by the subject matter according to the independent claims. Advantageous embodiments of the present invention are described by the dependent claims.

According to an embodiment of the present invention it is provided a method of operating a wind turbine, in particular plural wind turbines of a wind park, the method comprising: receiving, by the wind turbine- or a wind park controller, safety relevant information from a source external to the wind turbine; activating, by the wind turbine or the wind park controller, a safe operation mode depending on the received information, wherein the external source is different from a wind park controller.

The method may be performed by a wind turbine and/or a wind park controller. In particular, each wind turbine in a wind park may perform the method individually and independently from any other wind turbine. In other embodiments, only groups of wind turbines perform the method while other groups of wind turbines for example provide the safety relevant information to the groups, which perform the method. The method may be implemented in software and/or hardware.

The safety relevant information may for example be in a form of electrical and/or optical and/or wireless signals. The safety relevant information may comprise information which is relevant for the safety of the considered wind turbine. The safety relevant information may comprise different kinds of information as will be detailed below. Receiving the safety relevant information may enable the wind turbine or the wind park controller to decide whether the safe operation mode should be entered or adopted, in order to protect the wind turbine from damages.

The external source may take different forms in different embodiments as will be detailed below. The external source may be spatially separated from the wind turbine, for example by at least 1 km or for example at least 10 km, or even at least 100 km. When the external source is separated and spaced apart from the wind turbine, the external source may, prior to the considered wind turbine, have access to information which is safety relevant for the considered wind turbine. For example, the external source may be closer to an approaching storm than the considered wind turbine and may for example have information regarding measurement values of wind speed and/or wind turbulence or other measurement values of other characteristics of an approaching severe weather condition. This information may be included in the safety relevant information and may be supplied by the external source via one or more intermediate computer nodes for example, to the considered wind turbine controller or wind farm controller.

Thus, the wind turbine may receive the safety relevant information well ahead of the occurrence of the severe weather condition at the site of the considered wind turbine. Thereby, the wind turbine may be enabled, in good time before the severe weather condition reaches its own location site, to initiate or trigger or adopt a safe operation mode. In particular, activating the safe operation mode may take a substantial time duration. Thus, it is advantageous to timely receive the safety relevant information such that there is sufficient time to actually reach the safe operation mode. Activating the safe operation mode may at least comprise to initiate any actions required to finally reach the safe operation mode. In other embodiments, activating the safe operation mode may also comprise to establish the safe operation mode.

The safe operation mode may be considered as an operation mode of the wind turbine, wherein the wind turbine is efficiently protected from damage which may be caused by the severe weather condition, in particular high wind load. The safe operation mode may be realized in different manners as will be detailed below. Furthermore, one or more of any variant of the safe operation modes may be adopted for example in a sequence. Adopting the safe operation mode may protect components of the wind turbine from damage which would be at risk otherwise due to high wind load.

Whether the safe operation mode is activated or adopted may not only depend on the received information but may also depend on further information or own measurement results, according to embodiments of the present invention.

Activating the safe operation mode or adopting the safe operation mode may comprise activating one or more actuators, like yaw system actuators and/or pitch angle actuators and so on. For example, the safe operation mode may comprise to pitch out the rotor blades such as to reduce the lifting force of the blades. The safe operation mode may further comprise to orient the rotor into a downwind position, wherein the rotor plane spanned by the rotor blades may be oriented or positioned downwind. The safe operation mode may also include a reduction of power and or rotor speed.

The method may further comprise to process and/or evaluate the received information, in particular further in combination with other information in order to decide whether the safe operation mode should be activated.

When the receiving and/or the activation is performed by a wind park controller, the wind park controller may be communicatively coupled to the wind turbine(s) under consideration.

When the safety relevant information is received from an external source, it may be ensured that the wind turbine enters or adopts a safe operation mode early enough, before for example a severe weather condition actually reaches the installation site of the wind turbine. Thereby, the wind turbine and in particular components of the wind turbines may be protected from damage.

According to an embodiment of the present invention, the safety relevant information comprises at least one of: a command, a warning, in particular regarding a severe weather condition; an indication that at least one neighbouring wind turbine entered or is going to enter a safe operational mode; weather information, in particular wind related data.

The warning regarding the severe weather condition may comprise for example a characteristic of the severe weather condition, including expected or measured wind speed, expected or measured wind turbulence, expected or measured wind direction, etc. Further, the warning may comprise an expected arrival date and time and/or distance between the considered wind turbine and the severe weather condition. Additionally or alternatively, the warning may comprise expected wind caused loads on one or more components of the wind turbine.

In particular, when a wind turbine is the external source, the safety relevant information may comprise an indication that this neighbouring wind turbine has entered or is going to enter a safe operational mode. In particular, the wind turbine which receives the safety relevant information may receive a warning and/or an indication that a wind turbine entered a safe operational mode, from two or more wind turbines, in particular wind turbines in the same wind park. Depending on the number of warnings and/or number of indications regarding the safe operational mode, the wind turbine under consideration may decide whether to activate or adopt the safe operation mode or not.

The weather information may comprise any kind of information characterizing the current and/or actual and/or forecast and/or future weather situations at one or more locations. The weather information may also comprise geographical information. Thus, the weather information may be spatially and/or temporarily resolved. Furthermore, safety relevant information may not only be received from a single external source but may be received from multiple external sources. The safety relevant information from plural external sources may be processed and evaluated, in order to decide whether to activate the safe operational mode or not.

Thereby, the safety relevant information may be configured in different manners, increasing flexibility of the method.

According to an embodiment of the present invention, the weather information comprises information regarding at least one of: an actual and/or forecasted wind speed; an actual and/or forecasted wind turbulence; an actual and/or forecasted wind acceleration; at least one actual and/or forecasted wind load; an arrival point in time of a severe weather condition; a duration of a severe weather condition; a propagation speed and/or direction of a severe weather condition; a distance between the wind turbine and a severe weather condition; a type or characteristic of a severe weather condition.

Thereby, relevant information for characterizing potentially damaging weather conditions may be provided. Thus, the method may be applied to a number of different potentially damaging weather conditions. All kind of information regarding wind speed, turbulence, acceleration, wind load and so forth may be given spatially resolved and time resolved. Thus, an improved evaluation of the relevant information is enabled for providing a solid basis of the decision whether to adopt the safe operation mode or not.

According to an embodiment of the present invention, the severe weather condition is characterized by or comprises at least one of: wind speed being above a wind speed threshold; wind turbulence being above a wind speed threshold; wind load being above a load threshold; a storm or a cyclone.

Any characterization of the weather condition which enables to derive therefrom an expected load to at least one component of the wind turbine may also be included. Thereby, the potential effect to the wind turbine when subjected to the severe weather condition may appropriately and accurately be estimated, thereby further improving the reliability of the decision whether to adopt the safe operation mode or not.

According to an embodiment of the present invention, the method further comprises processing, in particular by a component of the wind turbine and/or the wind park controller or pilot, the safety relevant information, in particular weather information, using an evaluation logic to derive an evaluation result; wherein activating the safe operation mode depends on the evaluation result. And/or also including electronic storage, in which for example an executable software is stored which is executed by the processor.

The evaluation logic may have been previously determined for example based on training data and/or simulation and/or physical model. Thereby, it is enabled to combine different kinds of weather information components which may in particular be relevant for estimating potential damage to components of the wind turbine. When the evaluation logic is applied to derive the evaluation result, arriving at a decision whether to activate the safe operation mode or not may be enabled or simplified.

The evaluation result may for example indicate a degree or grade of damage which would be expected when for example a current or actual operational state or operation mode, for example a nominal operation mode, is maintained. In other embodiments, the (e.g. binary) evaluation result may indicate whether to activate or adopt the safe operation mode or not.

According to an embodiment of the present invention, the evaluation logic comprises at least one threshold regarding at least one of: a wind speed; a wind turbulence; a wind acceleration; at least one wind load; a remaining time duration to an (forecast) arrival point in time of a severe weather condition; a (forecast) time duration of a severe weather condition; a propagation speed and/or direction of a severe weather condition; a distance between the wind turbine and the severe weather condition.

The configuration (e.g. setting threshold(s)) of the evaluation logic may be enabled, as required by the particular application, which may depend on the physical constitution of the wind turbine and its components. Considering one or more of the thresholds within the evaluation logic may enable to account for one or more types of wind related loads on one or more components of the wind turbine. Thereby, protection of the components of the wind turbine may be improved.

According to an embodiment of the present invention, the at least one threshold depends on the constitution and/or integrity of the wind turbine in that the threshold is more strict for the wind turbine having higher degree of pre-damage and/or pre-wear and/or lifetime.

For example, for a relatively old wind turbine, more restrictive thresholds may be set compared to a younger wind turbine. Each wind turbine may have access to configuration data or integrity data of its plural components. Those integrity data of the plural components may be considered for setting the one or more thresholds. Furthermore, the thresholds may be derived by simulation or physical modelling, which may involve derivation of wind loads for different wind speed, wind turbulence and/or wind acceleration.

According to an embodiment of the present invention, if wind speed and/or wind turbulence and/or wind acceleration and/or wind load is or are above a respective threshold and if the arrival point in time of a severe weather condition is closer than a remaining time threshold and/or if the duration of the severe weather condition is above a duration threshold, the evaluation result indicates to activate the safe operation mode.

The evaluation result may also indicate which of potentially plural available safe operational modes should be activated. Depending on the evaluated weather condition, one of plural potential evaluation results may be established. Each of the plural evaluation results may for example indicate which of potentially plural available safe operational modes are to be adopted or which sequence of safe operational modes should be run through. Thereby, large flexibility is provided and it may be enabled to specifically react on a specific potential severe weather condition in a severe weather condition specific manner.

According to an embodiment of the present invention, activating the safe operation mode includes at least one of: curtailing rotational speed of the wind turbine rotor; curtailing power output of the wind turbine; stopping wind turbine power output; stopping rotation of the rotor; slow idling of the rotor; fast idling of the rotor; disconnecting the wind turbine from a utility grid; yawing the rotor into a downwind orientation.

Thereby, also conventional safe operation modes may be supported. For example, depending on a level of severity of the weather condition, the respective safe operation mode may be selected. The different safe operation modes may have particular properties or advantages. For example, in case of a less severe weather condition, the rotational speed of the rotor may only be reduced, i.e. curtailed, without completely stopping power output by the wind turbine. In this situation, the wind turbine may stay connected to the utility grid. In a more severe weather condition, however, the wind turbine may be disconnected from the utility grid and the rotor may be idling having a relatively low or a relatively fast rotational speed. Selecting one of the safe operation modes being available, may enable appropriate reaction to the particular severe weather condition, while ensuring protection of wind turbine components.

According to an embodiment of the present invention, the external source comprises at least one of: an entity remote from the wind turbine; another wind turbine, in particular adjacent to the wind turbine; a weather service; a weather forecast system; at least one met mast; a, in particular local, radar information system; an operator sending a control signal; a wind speed prediction system; a weather parameter measurement sensor or station. Thereby, great flexibility is achieved.

According to an embodiment of the present invention, a considered wind turbine may receive safety relevant information from two or more different external sources. Thereby, it may be enabled to receive more complete information which may accurately characterize a potentially approaching severe weather condition. The safety relevant information may be received via a communication network including at least one of: an internet; a virtual private network; a private network; a SCADA network; and/or wherein the plural wind turbines are communicatively connected via a communication network for communicating the information.

Thereby, conventionally available communication technology may be employed thereby simplifying the method. The communication network may comprise a wired and/or wireless and/or optical communication network.

According to an embodiment of the present invention, the safe mode of operation is activated before a severe weather condition reaches the wind turbine. In particular, the wind turbine may not utilize any wind speed or wind turbulence measurement which has been performed by a wind turbine wind sensor. In particular, the safe mode of operation may be established before the severe weather condition reaches the wind turbine. Thereby, failure of components of the wind turbine may be avoided.

It should be understood, that features, individually or in any combination, disclosed, described, provided or explained for a method of operating a wind turbine, may, individually or in any combination, also applied to an arrangement for operating a wind turbine, according to embodiments of the present invention and vice versa.

According to an embodiment of the present invention it is provided an arrangement for operating a wind turbine, the arrangement comprising: an input port adapted to receive safety relevant information from an external source external to the wind turbine; an activation module adapted to activate a safe operation mode depending on the received information, wherein the external source is different from a wind park controller.

The arrangement may for example be a portion of a wind turbine controller or a wind park controller. The input port may be a wired, wireless and/or optical input port. The activation module may be implemented in software and/or hardware. To activate a safe operation mode may comprise to supply one or more control signals to a driver or to an actuator.

According to an embodiment of the present invention it is provided a wind park, including at least one wind turbine; and at least one arrangement according to the preceding embodiment, configured as wind turbine controller or wind park controller.

The aspects defined above and further aspects of the present invention are apparent from the examples of embodiment to be described hereinafter and are explained with reference to the examples of embodiment. The invention will be described in more detail hereinafter with reference to examples of embodiment but the scope of the invention is defined by the appended claims.

### Brief Description of the Drawings

Embodiments of the present invention are now described with reference to the accompanying drawings. The invention is not restricted to the illustrated or described embodiments.
Fig. 1 schematically illustrates a wind park according to an embodiment of the present invention including plural arrangements according to embodiments of the present invention.
Fig. 2 schematically illustrates a method scheme according to an embodiment of the present invention.

### Detailed Description

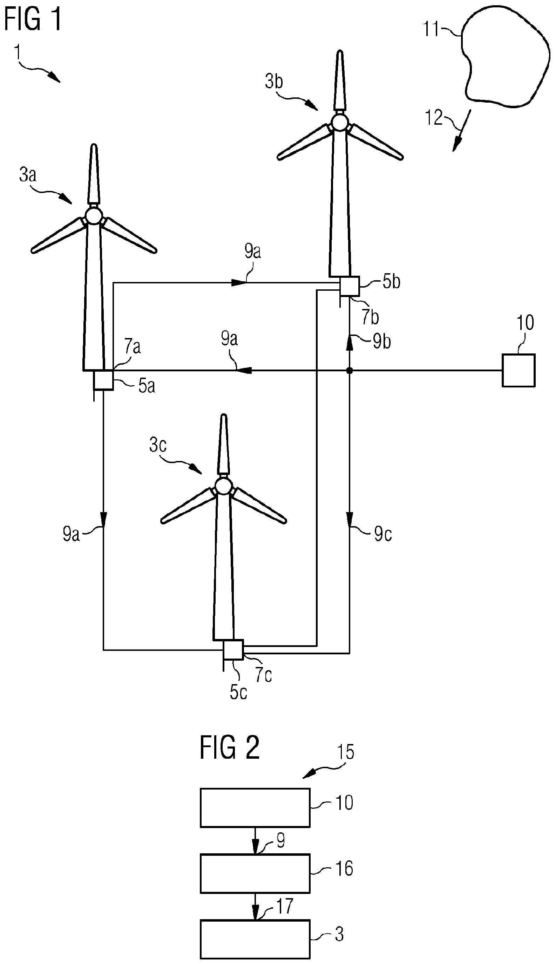

The wind park 1 schematically illustrated in Fig. 1 comprises plural wind turbines 3a, 3b, 3c and may potentially comprise a large number of wind turbines for example between 10 and 500. In the present embodiment, several wind turbines 3a, 3b, 3c each comprises an arrangement 5a, 5b, 5c according to an embodiment of the present invention for operating the respective wind turbine. In the illustrated embodiment, the arrangements 5a, 5b, 5c may for example be a portion of a not in detail illustrated wind turbine controller.

The arrangement 5a comprises an input port 7a which is adapted to receive safety relevant information 9a from an external source 10 which is external to the wind turbine 3a. Similarly, the wind turbine 3b comprises the arrangement 5b which receives safety relevant information 9b from the external source 10.

It should be understood, that features similar or same in structure and/or function are labelled in Fig. 1 with same numbers. A description of one element or structure not described in detail may be taken from the respective description of the corresponding structure or element.

The wind turbine 3c comprises an arrangement 5c which receives the safety relevant information 9c from the external source 10. The safety relevant information 9a, 9b, 9c may in particular be essentially identical. The external source 10 may for example comprise a weather forecast service or a wind data measurement station or system.

Each of the arrangements 5a, 5b, 5c further comprises a not in detail illustrated activation module which is adapted to activate a safe operation mode depending on the received information 9a, 9b, 9c, respectively.

The safety relevant information 9a, 9b, 9c may for example indicate that a low pressure region 11 having with a particular velocity 12 having a particular direction is approaching towards the wind park 1. The safety relevant information 9a, 9b, 9c may in general comprise weather information regarding wind speed, wind turbulence, wind acceleration and others as has been explained above.

The arrangements 5a, 5b, 5c may be adapted to process the safety relevant information 9a, 9b, 9c, respectively, using a not in detail illustrated evaluation logic which will be described below with reference to Fig. 2. The respective wind turbines 3a, 3b, 3c may further comprise respective actuators in order to adopt the safe operation mode, for example including to orienting the nacelle into a downwind orientation and/or for curtailing the rotational speed of the rotor, as has been explained in detail above.

According to an embodiment of the present invention, only one or more but not all wind turbines of the wind park 1 receive the safety relevant information. According to one embodiment for example, the wind turbine 3a receives the safety relevant information 9a from the external source 10 at the respective arrangement 5a. However, the other wind turbines 3b, 3c, receive the safety relevant information 9a not from the weather forecast service 10 (one example of an external source) but from the wind turbine 3a, also being external to the respective wind turbines 3b, 3c.

In particular, all wind turbines of the wind park 1 may be communicatively coupled to each other or to any other wind turbines of the wind park, mutually. By having a communication channel between all wind turbines of a wind park, whichever turbine measures a wind speed, loads or any other signal, which causes its protection system to activate, may communicate this to other wind turbines in the wind park. Thereby, the other wind turbines in the wind park may activate the same protection system or may adopt a safe operational mode regardless of their own measurements, but only based on another turbine's or a combination of other turbine's measurements.

By receiving and utilizing information from another wind turbine or a combination of other wind turbines, a considered wind turbine may achieve the advantage to have more time to protect itself against a severe weather condition, such as a tropical storm or cyclone by activation of a protection system, for example by yawing to the downwind position. This may represent especially an advantage, because the transition from the upwind yaw position to the downwind yaw position may take a considerable amount of time, such as several minutes to complete. Thus, damaging a vast number of turbines may therefore be reduced.

Additionally, the risk of a turbine yawing back upwind in the eye of a storm, which may have a low wind speed and load impact, may also be reduced, because the wind turbine may be informed from other wind turbines that the storm is still present. Thereby, the robustness of the protection system may be improved. The communication channels between mutual wind turbines may be realized by a safe communication system between wind turbines or may also use an existing system, for example a park pilot and wind turbine communication system. In particular, embodiments of the present invention may prevent erroneous deactivation of a protection system which for example conventionally may happen if the wind turbine is within the eye of the storm. Risks of damaging a vast number of turbines during a storm may be reduced because the protection system may be enabled earlier than conventionally known.

By receiving the safety relevant information 9a, 9b, 9c from the forecast service or wind parameter measurement station 10, the wind turbines 3a, 3b, 3c may protect themselves by enabling the respective protection system or adopting the safe operational mode well in advance before the storm reaches the park and damages the turbines. The information 9a, 9b, 9c may be received from one or more weather services, local radar information, manual control from an operator, wind speed prediction systems and others. The safety relevant information 9a, 9b, 9c may also additionally or alternatively contain forecast wind speed or wind acceleration data, expected loads, turbulence and/or storm duration. The data may be transferred to the wind park controller and/or the individual wind turbine controllers through the Internet (VPN) connections and/or a SCADA interface.

The wind park controller and/or the individual wind turbine controller or the respective arrangements 5a, 5b, 5c may comprise an internal logic which determines when to activate the protection system and which protection system or measure to activate. Thereby, a number of predefined thresholds values or limits of which the physical quantities such as wind speed, turbulence level and any other data has to exceed in order to activate the protection system or to decide whether to adopt the safe operational mode or not. This may also be combined or could also be performed in combination with a time limit on the expected arrival time of the extreme weather condition in order to avoid activation before it is necessary. The predetermined thresholds may be reduced for example for turbines which already have detected structural fatigue, damages or minor errors.

Fig. 2 schematically illustrates an embodiment 15 of a method of operating a wind turbine according to an embodiment of the present invention. The external weather system 10 may continuously measure wind data and supply the wind data (example of safety relevant data) 9 to a wind farm controller or wind turbine controller collectively labelled with reference sign 16. The receiving element 16 may for example, according to one embodiment of the present invention, be represented or implemented as an arrangement for example illustrated in Fig. 1 and labelled with reference signs 5a, 5b, 5c.

The wind farm controller and/or wind turbine controller 16 may evaluate the data against predefined limits (thresholds). Furthermore, the expected time of arrival against a predefined limit or threshold may be evaluated. If one or more evaluations indicate that the wind parameters are above one or more limits, a protection system may be activated and/or a safe operation mode may be activated or adopted. Therefore, the wind farm controller and/or wind turbine controller 16 may generate and supply a control signal, indicating a command 17 to the wind turbines or each individual turbine collectively labelled with reference sign 3 in Fig. 2. The individual wind turbines or all wind turbines may then activate or adopt a safe operation mode including for example to curtail speed and/or power and/or stop power output by fast idling and/or stop followed by slow idling and/or stop followed by downwind idling or others.

The forecast data may thereby be utilized in the controller protection systems which may put the wind turbines of the wind farm into a safe state before the extreme weather condition reaches the wind turbines.

By utilizing information from one or more external systems which communicate through Internet (VPN) or SCADA connection, the wind turbines may have the advantage of having more time to protect themselves from tropical storms or cyclones through activation of a protection system. The wind turbine design to extreme loads may thereby be reduced and costs may be reduced. Furthermore, the risk of a turbine disabling is its protection system in the eye of the storm may also be reduced, because the external information will reveal that the storm is still present. Thereby, the robustness of the protection system may be improved in general. Between the external source 10 and the wind turbines, a safe communication channel may be established.

By the embodiments of the present invention, extreme loads acting on components of the wind turbines may be reduced which may reduce the cost of the turbine and the support structure. Additionally or alternatively, an external command from a wind farm operator may be used in order to activate the downwind yaw position protection system if the operator has the knowledge of a severe weather condition approaching the wind park.

It should be understood that not all communication channels as illustrated in Fig. 1 need to be implemented for particular embodiments. For example, the wind turbines may only be connected to the external source 10 but do not necessarily need to be connected to each other. In other embodiments, only one or two or more wind turbines are communicatively connected to the external source 10 but the others are not connected to the external source 10 but only connected to one of those wind turbines which is connected to the external source 10. Other combinations are possible.

The scope of the invention is defined by the appended claims.

## Claims

1. Method of operating a wind turbine (3a,3b,3c), in particular plural wind turbines of a wind park (1), the method comprising:
receiving, by the wind turbine (3a) or a wind park controller, safety relevant information (9, 9a) from an external source (10) external to the wind turbine (3a);
activating, by the wind turbine (3a) or the wind park controller, a safe operation mode depending on the received information,
wherein the external source (10) is different from a wind park controller and comprises another neighbouring wind turbine (3b,3c), in particular adjacent to the wind turbine (3a),
wherein the safety relevant information (9, 9a) comprises an indication that the neighbouring wind turbine entered or is going to enter a safe operational mode.

2. Method according to the preceding claim, wherein the safety relevant information (9, 9a) comprises at least one of:
a warning, in particular regarding a severe weather condition;
an indication that at least one other neighbouring wind turbine entered or is going to enter a safe operational mode;
weather information, in particular wind related data.

3. Method according to the preceding claim, wherein the weather information (9, 9a) comprises information regarding at least one of:
an actual and/or forecasted wind speed;
an actual and/or forecasted wind turbulence;
an actual and/or forecasted wind acceleration;
at least one actual and/or forecasted wind load;
an arrival point in time of a severe weather condition;
a duration of a severe weather condition;
a propagation speed and/or direction of a severe weather condition;
a distance between the wind turbine and a severe weather condition;
a type or characteristic of a severe weather condition.

4. Method according to the preceding claim, wherein the severe weather condition is **characterized by** or comprises at least one of:
wind speed being above a wind speed threshold;
wind turbulence being above a wind speed threshold;
wind load being above a load threshold;
a storm or a cyclone.

5. Method according to one of the preceding claims, further comprising:
processing, in particular by a component of the wind turbine and/or the wind park controller or pilot, the safety relevant information (9, 9a), in particular weather information, using an evaluation logic to derive an evaluation result;
wherein activating the safe operation mode depends on the evaluation result.

6. Method according to the preceding claim, wherein the evaluation logic comprises at least one threshold regarding at least one of:
a wind speed;
a wind turbulence;
a wind acceleration;
at least one wind load;
a remaining time duration to an (forecasted) arrival point in time of a severe weather condition;
a (forecasted) time duration of a severe weather condition;
a propagation speed and/or direction of a severe weather condition;
a distance between the wind turbine and the severe weather condition.

7. Method according to the preceding claim, wherein the at least one threshold depends on the constitution and/or integrity of the wind turbine in that the threshold is more strict for the wind turbine having higher degree of pre-damage and/or pre-wear and/or lifetime.

8. Method according to one of the two preceding claims, wherein,
if wind speed and/or wind turbulence and/or wind acceleration and/or wind load is or are above a respective threshold and
if the arrival point in time of a severe weather condition is closer than a remaining time threshold and/or
if the duration of the severe weather condition is above a duration threshold,
the evaluation result indicates to activate the safe operation mode.

9. Method according to one of the preceding claims, wherein activating the safe operation mode includes at least one of:
curtailing rotational speed of the wind turbine rotor;
curtailing power output of the wind turbine;
stopping wind turbine power output;
stopping rotation of the rotor;
low idling of the rotor;
fast idling of the rotor;
disconnecting the wind turbine from a utility grid;
yawing the rotor into a downwind orientation.

10. Method according to one of the preceding claims, wherein the external source (10) comprises at least one of:
an entity remote from the wind turbine;
a weather service;
a weather forecast system;
at least one met mast;
a, in particular local, radar information system;
an operator sending a control signal;
a wind speed prediction system;
a weather parameter measurement sensor or station.

11. Method according to one of the preceding claims, wherein the safety relevant information (9, 9a) is received via a communication network including at least one of:
an internet;
a virtual private network;
a private network;
a SCADA network; and/or
wherein the plural wind turbines are communicatively connected via a communication network for communicating the information.

12. Method according to one of the preceding claims, wherein the safe mode of operation is activated before a severe weather condition reaches the wind turbine.

13. Arrangement (5a,5b,5c) for operating a wind turbine (3a,3b,3c), the arrangement comprising:
an input port (7a) adapted to receive safety relevant information (9,9a) from an external source (19) external to the wind turbine (3a);
an activation module adapted to activate a safe operation mode depending on the received information (9, 9a), wherein the external source (10) is different from a wind park controller and comprises another neighbouring wind turbine (3b,3c), in particular adjacent to the wind turbine (3a),
wherein the safety relevant information (9, 9a) comprises an indication that the neighbouring wind turbine entered or is going to enter a safe operational mode.

14. Wind park (1), including:
at least one wind turbine (3a,3b,3c); and
at least one arrangement (5aq) according to the preceding claim, configured as wind turbine controller or wind park controller.

## Patentansprüche

1. Verfahren zum Betreiben einer Windkraftanlage (3a, 3b, 3c), insbesondere mehrerer Windkraftanlagen eines Windparks (1), wobei das Verfahren umfasst:
durch die Windkraftanlage (3a) oder eine Windparksteuerung erfolgendes Empfangen sicherheitsrelevanter Informationen (9, 9a) von einer externen Quelle (10) außerhalb der Windkraftanlage (3a) ;
durch die Windkraftanlage (3a) oder die Windparksteuerung erfolgendes Aktivieren eines sicheren Betriebsmodus in Abhängigkeit von den empfangenen Informationen,
wobei die externe Quelle (10) von einer Windparksteuerung verschieden ist und eine andere benachbarte Windkraftanlage (3b, 3c), insbesondere neben der Windkraftanlage (3a), umfasst,
wobei die sicherheitsrelevanten Informationen (9, 9a) eine Anzeige umfassen, dass die benachbarte Windkraftanlage in einen sicheren Betriebsmodus eingetreten ist oder eintreten wird.

2. Verfahren nach dem vorhergehenden Anspruch, wobei die sicherheitsrelevanten Informationen (9, 9a) mindestens eines der Folgenden umfassen:
eine Warnung, insbesondere vor einer Schlechtwetterlage;
eine Anzeige, dass mindestens eine andere benachbarte Windkraftanlage in einen sicheren Betriebsmodus eingetreten ist oder eintreten wird;
Wetterinformationen, insbesondere windbezogene Daten.

3. Verfahren nach dem vorhergehenden Anspruch, wobei die Wetterinformationen (9, 9a) Informationen über mindestens eines der Folgenden umfassen:
eine tatsächliche und/oder prognostizierte Windgeschwindigkeit;
eine tatsächliche und/oder prognostizierte Windturbulenz;
eine tatsächliche und/oder prognostizierte Windbeschleunigung;
mindestens eine tatsächliche und/oder prognostizierte Windlast;
einen Ankunftszeitpunkt einer Schlechtwetterlage;
eine Dauer einer Schlechtwetterlage;
eine Ausbreitungsgeschwindigkeit und/oder -richtung einer Schlechtwetterlage;
eine Entfernung zwischen der Windkraftanlage und einer Schlechtwetterlage;
eine Art oder ein Merkmal einer Schlechtwetterlage.

4. Verfahren nach dem vorhergehenden Anspruch, wobei die Schlechtwetterlage durch mindestens eines der Folgenden gekennzeichnet ist oder diese umfasst:
eine Windgeschwindigkeit oberhalb eines Windgeschwindigkeitsschwellenwertes;
eine Windturbulenz oberhalb eines Windgeschwindigkeitsschwellenwertes;
eine Windlast oberhalb eines Lastschwellenwertes;
einen Sturm oder einen Zyklon.

5. Verfahren nach einem der vorhergehenden Ansprüche, ferner umfassend:
Verarbeiten der sicherheitsrelevanten Informationen (9, 9a), insbesondere Wetterinformationen, unter Verwendung einer Auswertungslogik zur Ableitung eines Auswertungsergebnisses, insbesondere durch eine Komponente der Windkraftanlage und/oder die Windparksteuerung oder den Piloten;
wobei das Aktivieren des sicheren Betriebsmodus von dem Auswertungsergebnis abhängt.

6. Verfahren nach dem vorhergehenden Anspruch, wobei die Auswertungslogik mindestens einen Schwellenwert bezüglich mindestens eines der Folgenden umfasst:
einer Windgeschwindigkeit;
einer Windturbulenz;
einer Windbeschleunigung;
mindestens einer Windlast;
einer verbleibenden Zeitdauer bis zu einem (prognostizierten) Ankunftszeitpunkt einer Schlechtwetterlage;
einer (prognostizierten) Zeitdauer einer Schlechtwetterlage;
einer Ausbreitungsgeschwindigkeit und/oder -richtung einer Schlechtwetterlage;
einer Entfernung zwischen der Windkraftanlage und der Schlechtwetterlage.

7. Verfahren nach dem vorhergehenden Anspruch, wobei der mindestens eine Schwellenwert insofern von dem Zustand und/oder der Unversehrtheit der Windkraftanlage abhängt, als der Schwellenwert strenger ist, wenn die Windkraftanlage einen höheren Grad an Vorschädigung und/oder Vorverschleiß und/oder Standzeit aufweist.

8. Verfahren nach einem der beiden vorhergehenden Ansprüche, wobei,
wenn eine Windgeschwindigkeit und/oder eine Windturbulenz und/oder eine Windbeschleunigung und/oder eine Windlast oberhalb eines jeweiligen Schwellenwertes liegt bzw. liegen und
wenn der Ankunftszeitpunkt einer Schlechtwetterlage näher als ein Restzeitschwellenwert ist und/oder
wenn die Dauer der Schlechtwetterlage über einem Dauerschwellenwert liegt,
das Auswertungsergebnis anzeigt, dass der sichere Betriebsmodus aktiviert werden soll.

9. Verfahren nach einem der vorhergehenden Ansprüche, wobei das Aktivieren des sicheren Betriebsmodus mindestens eines der Folgenden umfasst:
Drosseln einer Drehzahl des Rotors der Windkraftanlage;
Drosseln einer Leistungsabgabe der Windkraftanlage;
Stoppen einer Leistungsabgabe der Windkraftanlage;
Stoppen einer Drehung des Rotors;
Versetzen des Rotors in einen niedrigen Leerlauf;
Versetzen des Rotors in einen schnellen Leerlauf;
Trennen der Windkraftanlage von einem Versorgungsnetz; Gieren des Rotors in eine leeseitige Ausrichtung.

10. Verfahren nach einem der vorhergehenden Ansprüche, wobei die externe Quelle (10) mindestens eines der Folgenden umfasst:
eine von der Windkraftanlage entfernte Einheit;
einen Wetterdienst;
ein Wettervorhersagesystem; mindestens einen Messmast;
ein, insbesondere lokales, Radarinformationssystem;
einen Betreiber, der ein Steuersignal sendet;
ein Windgeschwindigkeitsvorhersagesystem;
einen Sensor oder eine Station zur Messung von Wetterparametern.

11. Verfahren nach einem der vorhergehenden Ansprüche, wobei die sicherheitsrelevanten Informationen (9, 9a) über ein Kommunikationsnetzwerk empfangen werden, das mindestens eines der Folgenden umfasst:
ein Internet;
ein virtuelles privates Netzwerk;
ein privates Netzwerk;
ein SCADA-Netzwerk; und/oder
wobei die mehreren Windkraftanlagen über ein Kommunikationsnetzwerk in Kommunikationsverbindung stehen, um die Informationen zu übermitteln.

12. Verfahren nach einem der vorhergehenden Ansprüche, wobei der sichere Betriebsmodus aktiviert wird, bevor eine Schlechtwetterlage die Windkraftanlage erreicht.

13. Anordnung (5a, 5b, 5c) zum Betreiben einer Windkraftanlage (3a, 3b, 3c), wobei die Anordnung umfasst:
einen Eingangsanschluss (7a), der geeignet ist, sicherheitsrelevante Informationen (9, 9a) von einer externen Quelle (19) außerhalb der Windkraftanlage (3a) zu empfangen;
ein Aktivierungsmodul, das geeignet ist, einen sicheren Betriebsmodus in Abhängigkeit von den empfangenen Informationen (9, 9a) zu aktivieren, wobei die externe Quelle (10) von einer Windparksteuerung verschieden ist und eine andere benachbarte Windkraftanlage (3b, 3c), insbesondere neben der Windkraftanlage (3a), umfasst,
wobei die sicherheitsrelevanten Informationen (9, 9a) eine Anzeige umfassen, dass die benachbarte Windkraftanlage in einen sicheren Betriebsmodus eingetreten ist oder eintreten wird.

14. Windpark (1), umfassend:
mindestens eine Windkraftanlage (3a, 3b, 3c); und
mindestens eine Anordnung (5aq) nach dem vorhergehenden Anspruch, die als Windkraftanlagensteuerung oder Windparksteuerung konfiguriert ist.

## Revendications

1. Procédé de fonctionnement d'une éolienne (3a, 3b, 3c), en particulier de plusieurs éoliennes d'un parc éolien (1), le procédé comprenant :
la réception, par l'éolienne (3a) ou un dispositif de commande de parc éolien, d'informations relatives à la sécurité (9, 9a) provenant d'une source externe (10) externe à l'éolienne (3a) ;
l'activation, par l'éolienne (3a) ou le dispositif de commande de parc éolien, d'un mode de fonctionnement sûr en fonction des informations reçues,
dans lequel la source externe (10) est différente d'un dispositif de commande de parc éolien et comprend une autre éolienne (3b, 3c) voisine, en particulier adjacente à l'éolienne (3a),
dans lequel les informations relatives à la sécurité (9, 9a) comprennent une indication que l'éolienne voisine est entrée ou s'apprête à entrer dans un mode de fonctionnement sûr.

2. Procédé selon la revendication précédente, dans lequel les informations relatives à la sécurité (9, 9a) comprennent au moins l'un parmi :
un avertissement, en particulier concernant une condition météorologique difficile ;
une indication que l'au moins une autre éolienne voisine est entrée ou s'apprête à entrer dans un mode de fonctionnement sûr ;
des informations météorologiques, en particulier des données relatives au vent.

3. Procédé selon la revendication précédente, dans lequel les informations météorologiques (9, 9a) comprennent des informations concernant au moins l'un parmi :
une vitesse du vent réelle et/ou prévisionnelle ;
une turbulence du vent réelle et/ou prévisionnelle ;
une accélération du vent réelle et/ou prévisionnelle ;
au moins une charge due au vent réelle et/ou prévisionnelle ;
un instant d'arrivée d'une condition météorologique difficile ;
une durée d'une condition météorologique difficile ;
une vitesse et/ou direction de propagation d'une condition météorologique difficile ;
une distance entre l'éolienne et une condition météorologique difficile ;
un type ou une caractéristique d'une condition météorologique difficile.

4. Procédé selon la revendication précédente, dans lequel la condition météorologique difficile est **caractérisée par** ou comprend au moins l'un parmi :
le fait que la vitesse du vent est au-dessus d'un seuil de vitesse du vent ;
le fait que la turbulence du vent est au-dessus d'un seuil de vitesse du vent ;
le fait que la charge due au vent est au-dessus d'un seuil de charge ;
une tempête ou un cyclone.

5. Procédé selon l'une des revendications précédentes, comprenant en outre :
le traitement, en particulier par un composant de l'éolienne et/ou du dispositif de commande ou pilote du parc éolien, des informations relatives à la sécurité (9, 9a), en particulier d'informations météorologiques, à l'aide d'une logique d'évaluation pour déduire un résultat d'évaluation ;
dans lequel l'activation du mode de fonctionnement sûr dépend du résultat d'évaluation.

6. Procédé selon la revendication précédente, dans lequel la logique d'évaluation comprend au moins un seuil concernant au moins l'un parmi :
une vitesse du vent ;
une turbulence du vent ;
une accélération du vent ;
au moins une charge due au vent ;
une durée temporelle restante jusqu'à un instant d'arrivée (prévisionnel) d'une condition météorologique difficile ;
une durée temporelle (prévisionnelle) d'une condition météorologique difficile ;
une vitesse et/ou direction de propagation d'une condition météorologique difficile ;
une distance entre l'éolienne et la condition météorologique difficile.

7. Procédé selon la revendication précédente, dans lequel l'au moins un seuil dépend de la constitution et/ou de l'intégrité de l'éolienne en ce que le seuil est plus strict pour l'éolienne ayant un degré plus élevé de pré-endommagement et/ou de pré-usure et/ou de durée de vie.

8. Procédé selon l'une des deux revendications précédentes, dans lequel,
si la vitesse du vent et/ou la turbulence du vent et/ou l'accélération du vent et/ou la charge due au vent est ou sont au-dessus d'un seuil respectif et
si l'instant d'arrivée d'une condition météorologique difficile est plus proche qu'un seuil temporel restant et/ou
si la durée de la condition météorologique difficile est au-dessus d'un seuil de durée,
le résultat d'évaluation indique d'activer le mode de fonctionnement sûr.

9. Procédé selon l'une des revendications précédentes, dans lequel l'activation du mode de fonctionnement sûr inclut au moins l'un parmi :
la limitation de la vitesse de rotation du rotor d'éolienne ;
la limitation de la production d'énergie de l'éolienne ;
l'arrêt de la production d'énergie éolienne ;
l'arrêt de la rotation du rotor ;
la mise à un ralenti lent du rotor ;
la mise à un ralenti rapide du rotor ;
la déconnexion de l'éolienne d'un réseau électrique ;
l'entraînement en lacet du rotor dans une orientation sous le vent.

10. Procédé selon l'une des revendications précédentes, dans lequel la source externe (10) comprend au moins l'un parmi :
une entité distante de l'éolienne ;
un service météorologique ;
un système de prévisions météorologiques ;
au moins un mât météorologique ;
un système d'informations radar, en particulier local ;
un opérateur envoyant un signal de commande ;
un système de prédiction de vitesse du vent ;
un capteur ou une station de mesure de paramètres météorologiques.

11. Procédé selon l'une des revendications précédentes, dans lequel les informations relatives à la sécurité (9, 9a) sont reçues via un réseau de communication incluant au moins l'un parmi :
un internet ;
un réseau privé virtuel ;
un réseau privé ;
un réseau SCADA ; et/ou
dans lequel les plusieurs éoliennes sont connectées en communication via un réseau de communication pour la communication des informations.

12. Procédé selon l'une des revendications précédentes, dans lequel le mode de fonctionnement sûr est activé avant qu'une condition météorologique difficile n'atteigne l'éolienne.

13. Agencement (5a, 5b, 5c) pour le fonctionnement d'une éolienne (3a, 3b, 3c), l'agencement comprenant :
un port d'entrée (7a) conçu pour recevoir des informations relatives à la sécurité (9, 9a) provenant d'une source externe (19) externe à l'éolienne (3a) ;
un module d'activation conçu pour activer un mode de fonctionnement sûr en fonction des informations reçues (9, 9a),
dans lequel la source externe (10) est différente d'un dispositif de commande de parc éolien et comprend une autre éolienne (3b, 3c) voisine, en particulier adjacente à l'éolienne (3a),
dans lequel les informations relatives à la sécurité (9, 9a) comprennent une indication que l'éolienne voisine est entrée ou s'apprête à entrer dans un mode de fonctionnement sûr.

14. Parc éolien (1), incluant :
au moins une éolienne (3a, 3b, 3c) ; et
au moins un agencement (5aq) selon la revendication précédente, configuré comme un dispositif de commande d'éolienne ou un dispositif de commande de parc éolien.
